# EUROPÄISCHE PATENTSCHRIFT

(11) **EP 4 145 971 B1**
(45) Veröffentlichungstag und Bekanntmachung des Hinweises auf die Patenterteilung: **20.05.2026**
(21) Anmeldenummer: 21727994.2
(22) Anmeldetag: 05.05.2021
(51) Int. Cl.: A01B 39/18, A01M 21/02

(54) **MEHRREIHIGE MASCHINE UND VERFAHREN ZUR MECHANISCHEN REGULIERUNG VON BEIKRÄUTERN UND SCHÄDLINGEN**
MULTIROW MACHINE AND METHOD FOR MECHANICALLY REGULATING WEEDS AND PESTS
MACHINE MULTI-RANGÉES ET PROCÉDÉ DE RÉGULATION MÉCANIQUE DES MAUVAISES HERBES ET DES NUISIBLES

(30) Priorität: 06.05.2020 DE 102020002721
(43) Veröffentlichungstag der Anmeldung: 15.03.2023
(73) Patentinhaber: Grimme Landmaschinenfabrik SE & Co. KG, 49104 Damme (DE)
(72) Erfinder: STROTHMANN, Wolfram, 49078 Osnabrück (DE)
(74) Vertreter: Wischmeyer, André
(86) Internationale Anmeldenummer: PCT/EP2021/000060
(87) Internationale Veröffentlichungsnummer: WO 2021/223902

(56) Entgegenhaltungen:
- WO-A1-2016/191825
- US-A1- 2021 051 836
- US-B1- 6 199 000
- PREZ-RUIZ M ET AL: "Automatic GPS-based intra-row weed knife control system for transplanted row crops", COMPUTERS AND ELECTRONICS IN AGRICULTURE, ELSEVIER, AMSTERDAM, NL, vol. 80, 10 October 2011 (2011-10-10), pages 41 - 49, XP028123417, ISSN: 0168-1699, [retrieved on 20111017], DOI: 10.1016/J.COMPAG.2011.10.006

## Beschreibung

Die vorliegende Erfindung bezieht sich auf eine mehrreihige Maschine zur mechanischen Regulierung von Beikräutern und Schädlingen in Gärten oder landwirtschaftlichen Feldern sowie ein Verfahren für deren Einsatz.

### Stand der Technik

Mechanische Beikrautregulierung ist ein gefragtes Verfahren zur Regulierung des Beikrautbesatzes in landwirtschaftlichen Flächen, sowohl im ökologischen wie auch im konventionellen Landbau. Zum Einen werden zunehmend chemische Herbizide vom Markt genommen, da Zulassungen entfallen oder nicht erteilt werden. Dies ist in der Gefahr von unbekannter Folgewirkungen der Freisetzung der Chemikalien, insbesondere Langzeitwirkungen auf Umwelt und menschliche Gesundheit, begründet. Zum Anderen werden mit längerem Einsatz der chemischen Mittel in zunehmendem Maße Resistenzen bestimmter Beikräuter beobachtet. Hieraus entstehen Wirkungslücken die im konventionellen Landbau nur durch nicht-chemische Maßnahmen geschlossen werden können. Im ökologischen Landbau ist eine chemische Unkrautbekämpfung grundsätzlich nicht erlaubt, sodass mechanische Beikrautregulierung hier das meistverwendete Verfahren ist.

Innerhalb der mechanischen Beikrautregulierung muss zwischen flächiger und selektiver Regulierung unterschieden werden. Während die flächige Beikrautregulierung ohne elektronische Ansteuerung der Beikrautregulierungswerkzeuge erfolgt, werden die Werkzeuge bei selektiver Beikrautregulierung gezielt zumindest an den Stellen aktiviert, wo sich ein Beikraut befindet, und gezielt zumindest an den Stellen deaktiviert, wo sich eine Nutzpflanze befindet. Folglich ist eine flächige Beikrautregulierung nur in den Bereichen des Feldes zwischen den Nutzpflanzenreihen möglich, während eine selektive Beikrautregulierung auch im Bereich der Nutzpflanzenreihen möglich ist.

Während sich für die flächige, mechanische Beikrautregulierung zwischen den Pflanzreihen, insbesondere in Kombination mit kameragestützter Reihenführung der Maschine, in den letzten Jahren ein breiter Markt mit vielen Anbietern entwickelt hat, ist die selektive Beikrautregulierung immer noch vor Allem ein Forschungsthema. Trotz großer Nachfrage beschränkt sich das Angebot hier im Wesentlichen auf wenige Anbieter, die den Bereich zwischen den Pflanzen innerhalb der Reihe bei Kulturen mit langen Pflanzabständen innerhalb der Reihe wiederum flächig durch ein bis zwei Aktoren bearbeiten. Zu nennen sind hier beispielsweise der Robovator der Fa. Kress [NP1] oder der RoboCrop der Fa. Garford [NP2].

Beikrautregulierungssysteme mit durch Manipulatoren bewegten Werkzeugen o- der mehreren Aktoren pro Reihe, die eine höhere Auflösung der Beikrautregulierung im Feld und damit eine höhere Selektivität erreichen, bleiben ein Forschungsthema, welches eine Breite Abhandlung in Patent- und Nichtpatentliteratur erfährt [NP3], Regelmäßig werden Fräsen oder Greifer als mögliche Aktoren für die Beikrautregulierung genannt, beispielsweise durch DE102018120756 (A1) und DE102011114901 (A1). Langsenkamp et al. [NP4] haben die Wirksamkeit mechanischer Stempel für die Beikrautregulierung nachgewiesen. Auch DE102013222776 (A1) und US2018139947 (A1) verwenden stempelartige Werkzeuge, wobei der Stempel durch einen Manipulator an die Zielposition verbracht wird. Bei DE 102016224733 (A1) wird des Weiteren das Beikraut durch ein Fluid, welches unter Druck durch den Stempel im ausgefahrenen Zustand abgegeben wird, zusätzlich geschädigt. DE102016217816 (A1) befasst sich mit der Reinhaltung der Stempelaktorik im Feldeinsatz. Strothmann et al. [NP5] schlagen ein System vor, bei welchem Stempel in einer Reihe hinter einem bildgebenden Sensor angeordnet sind und während der Überfahrt über eine oder mehrere Pflanzreihen gezielt einzeln ausgelöst werden, wenn ein Beikraut erkannt wird. Ein solcher Aufbau hat zum Einen den Vorteil einer deutlich höheren Auflösung der Selektivität der Beikrautregulierung im Feld im Vergleich zu Systemen die flächig zwischen den Pflanzen in der Reihe arbeiten, wie beispielsweise die obenerwähnten Robovator der Fa. Kress [NP1] oder RoboCrop der Fa. Garford. Zum Anderen erfordert ein solcher Aufbau keinen Manipulator oder keine Verfahrachsen zum Verschieben der Aktoren an die Einsatzposition im Feld.

Die skizzierten Forschungsansätze konnten bislang noch keinen Einzug in die praktische Anwendung finden, da eine Reihe von Praxisanforderungen insbesondere im Bereich Standfestigkeit und Flächenleistung noch nicht in zufriedenstellendem Maße gelöst werden konnten.

Ein weiterer Engpass vorbekannter Hacktechnik ist, dass diese keine Erkennung der Reihen im Vorauflauf ermöglichen. Ein Blindhacken, d. h. vor Auflaufen der Nutzpflanzen ist damit in der Regel nicht möglich. Hier ist energieintensives flächiges Abflämmen ein typisches Verfahren, beispielsweise im ökologischen Möhrenanbau.

Ein weiteres Anwendungsfeld, in welchem die vorliegende Erfindung zum Einsatz kommen kann, ist die Schädlingsbekämpfung in Landwirtschaftlichen Feldern. Beispielsweise besteht die Möglichkeit Schnecken, welche regelmäßig große Schäden in jungen Raps- oder Getreidebeständen verursachen, durch den Einsatz von Walzen, insbesondere Nachts, zu bekämpfen. Diese Möglichkeit ist aber nur im Vorauflauf möglich, da anschließend eine Schädigung der Nutzpflanze durch flächige Walzen zu erwarten wäre.

Aus dem Artikel "Automatik GPS-based intra-row weed knife control system for transplanted row crops" von Perez-Ruiz et al ist ein Trägerfahrzeug bekannt, welches eine Vorrichtung zur Beikrautregulierung trägt. Dieses Trägerfahrzeug verfährt entlang einer vorgegebenen GPS-Karte. Ein solches Verfahren ist ebenfalls aus der WO 2016/191825 A1 bekannt. Die US 6,199,000 B1 beschreibt die Ausbringung von erntegutspezifischen Düngern und Pestiziden mittels eines "real time kinematic (RTK) global positioning system (GPS)".

### Aufgabe

Aufgabe der vorliegenden Erfindung ist es, eine schlagkräftige, mehrreihige Maschine zur mechanischen Regulierung von Beikräutern und Schädlingen in Gärten oder landwirtschaftlichen Feldern bereitzustellen, welche kostengünstig mit wenig redundanten Komponenten umsetzbar ist und verschiedene Engpässe vorbekannter Technik überwindet.

### Lösung

Die Aufgabe wird durch eine gattungsgemäße Vorrichtung ausgebildet als mehrreihige Maschine zur mechanischen Regulierung von Beikräutern und Schädlingen gelöst, welche umfasst:
a) ein Trägerfahrzeug,
b) mehrere selektiv arbeitende, mechanischen Bearbeitungseinheiten bestehend aus mindestens einer Sensorikeinheit zur Detektion von Beikräutern und/oder Schädlingen und mindestens einer Anordnung von mehreren einzeln angesteuerten Werkzeugaktoreinheiten, welche mit dem Rahmen des Trägerfahrzeugs verbunden sind und durch dieses über die zu bearbeitende Fläche gefahren werden, sowie deren Aktoren durch in Synchronisation mit Sensorikeinheit und Fahrtweg des Trägerfahrzeugs gesteuerte, zumindest teilweise vertikale Hübe jeweils mindestens ein Werkzeug von einer Ruhe- in eine Arbeitsposition verschieben, wobei das Werkzeug mindestens dann in Arbeitsposition gebracht wird, wenn die Sensorikeinheit an der Stelle des Feldes, wo sich das Werkzeug befindet, ein oder mehrere Objekte ganz oder teilweise als zu bearbeiten erkannt hat
c) und mehrere flächig arbeitende Bearbeitungseinheiten,
wobei die flächig arbeitenden Bearbeitungseinheiten zwischen den Pflanzreihen der Nutzpflanzen arbeiten und die selektiv arbeitenden Bearbeitungseinheiten im Bereich der Pflanzreihen der Nutzpflanzen arbeiten, und wobei die Sensorikeinheit einer oder mehrerer der selektiv arbeitenden Bearbeitungseinheiten so konfiguriert ist, dass sie basierend auf den erfassten Sensorrohdaten sowohl Signale für die Ansteuerung der jeweils gekoppelten Anordnung von mehreren einzeln angesteuerten Werkzeugaktoreinheiten ermittelt als auch Spurführungssignale ermittelt.

Ein solcher Aufbau kombiniert die Vorteile vorbekannter Serienlösungen für Hacktechnik mit den neuesten Forschungsergebnissen. Er ermöglicht eine schlagkräftige Bearbeitung der Flächen mit präziser Ansteuerung. Redundante Sensoriken - einmal zur Ansteuerung der einzelnen Bearbeitungseinheiten und zur Spurführung des Tragerfahrzeugs werden vermieden. Innerhalb der Pflanzreihen ermöglicht die Maschine eine präzise Bearbeitung in Teilflächen mit Rastergrößen von beispielsweise circa 0,3 bis 2,5 cm.

Die Maschinen eignet sich zum einen zur Beikrautregulierung. Hierbei wird zwischen den Pflanzreihen der Nutzpflanzen flächig gearbeitet, innerhalb der Pflanzreihen selektiv nur die Beikräuter zerstört. Die Beikrautregulierung kann im Nachauflauf, das heißt nach Durchschießen der Keimlinge der Nutzpflanzen durch die Bodenoberfläche erfolgen. Alternativ ist eine Beikrautregulierung im Vorauflauf möglich. Hierbei wird die Maschine im Anbauverfahren mit einer Saat- oder Pflanzgutablagevorrichtung oder -maschine, die während Ihrer Verwendung Rillen oder Muster oder ähnliches in die Bodenoberfläche einbringt, verwendet. Die Rillen oder Muster sind hierbei so gestaltet, dass durch diese die Reihen und/oder die Punkte der Ablage des Saat- oder Pflanzgutes an der Oberfläche erkennbar sind. Diese Rillen oder Muster werden durch die Sensorikeinheit oder die Sensorikeinheiten einer oder mehrerer der Bearbeitungseinheiten erkannt und erlauben eine präzise Navigation entlang der Pflanzreihen im Vorauflauf. Vorzugsweise sind die Sensorikeinheiten in dieser Konstellation mit präziser 3D-Sensorik ausgestattet. Sind zusätzlich zu den Reihen der Saat- oder Pflanzgutablage, das heißt längs zur Fahrrichtung des Saat- oder Pflanzgutablagevorganges, auch die einzelnen Positionen, das heißt die Punkte längs und quer zur Fahrrichtung des Saat- oder Pflanzgutablagevorganges, entsprechend durch die in einem vorangegangenen Arbeitsschritt eingesetzte Maschine markiert worden, so kann die erfindungsgemäße Maschine zusätzlich innerhalb der Pflanzreihen zwischen den Positionen, an denen die Keimlinge zu erwarten sind, im Vorauflauf "blind" hacken. Dieses Verfahren vermeidet den Einsatz energieintensiver Abflammtechnik. Weiterhin ermöglicht es die Vorverlegung des Saatzeitpunktes von Kulturen mit langsamer Jugendentwicklung im ökologischen Landbau. Diese Kulturen, beispielsweise Mais oder Zuckerrüben, werden im ökologischen Landbau typischerweise später ausgesät als im konventionellen Landbau, da ein Hacken technisch erst nach Auflaufen möglich ist und die Beikräuter sich bei niedrigen Temperaturen schneller entwickeln als die Nutzpflanzen. Um diesen Vorsprung vor der ersten Hackmaßnahme zu vermeiden, werden die Nutzpflanzen daher erst später ausgesät, unter Inkaufnahme der entsprechenden Reduktion des Ertragsniveaus. Unter Verwendung der erfindungsgemäßen Maschine, insbesondere in einem Verfahren entsprechend dem Anspruch 11, kann somit die erste Hackmaßnahme vorverlegt werden, was ebenfalls eine Vorverlegung des Saatzeitpunktes solcher Kulturen ermöglicht und damit eine Erhöhung des Ertragsniveaus.

Als Trägerfahrzeug für die erfindungsgemäße Vorrichtung eignen sich beispielsweise autonome Feldroboter, Kombinationen aus bemannten oder unbemannten Traktoren und landwirtschaftlichen Anbaugeräten, die durch den Traktor gezogen oder getragen werden können, oder bemannte oder unbemannte landwirtschaftliche Selbstfahrer.

Die für erfindungsgemäße Vorrichtung erforderliche, mindestens eine Sensorikeinheit umfasst einen oder mehrere bildgebende oder nicht-bildgebende Sensoren. Als Sensoren eignen sich insbesondere Kameras, 3D-Messsysteme, wie Lichtschnitt- oder Time-of-Flight-Sensoren, Hyperspektrale Systeme oder Radar-Systeme. Weiterhin können Hilfssensoren, wie Drehgeber oder Helligkeitssensoren umfasst sein. Außerdem kann die Sensorikeinheit weitere Hilfsmittel, wie Abschattung, Beleuchtung oder Montagevorrichtungen umfassen. Weiterhin umfasst die Sensorikeinheit eine oder mehrere erforderliche Recheneinheiten zur Auswertung in den Sensordaten. Je nach Anwendung kann die Auswertung die Erkennung von Nutzpflanzen und Beikräutem und/oder die Erkennung von Mustern und Rillen im Bodenprofil und/oder die Erkennung von Schädlingen und/oder weitere Rechenschritte umfassen. Weiterhin umfasst die Auswertung bei einem oder mehreren Recheneinheiten die Ermittlung von Spurführungssignalen. Die Recheneinheiten umfassen übliche Komponenten, wie Prozessor, Arbeitsspeicher, Persistenten Speicher, Schnittstellen, et cetera, sowie eines oder mehrere Computerprogramme mit Befehlen, welche die Detektion von Beikräutem oder Beikrautbestandteilen sowie weitere Steuerungs- und Regelungsaufgaben implementieren. Für die Durchführung von Bildauswertung eignen sich insbesondere GPGPU- (General Purpose Graphics Processing Unit) oder FPGA- (Field-programmable Gate Array), welche ebenfalls durch die Recheneinheit einfach oder mehrfach umfasst sein können. Gegebenenfalls erforderliche Klassifizierer oder Datengrundlagen für eine oder mehrere Detektions- oder Klassifizierungsaufgaben können auf der oder den Recheneinheiten lokal gespeichert sein, oder über Datenschnittstellen oder über eine oder mehrere Mensch-Maschine-Schnittstelle eingebracht werden. Weiterhin umfasst die Sensorikeinheit Spannungsversorgung und elektrische oder logische Schnittstellen zur Ansteuerung der einzelnen Aktoren der Anordnung von Werkzeugaktoreinheiten, beispielsweise durch Ansteuerung hydraulischer oder pneumatischer Ventile oder durch Ansteuerung von Motoren oder elektrischen Schaltern.

Die für die erfindungsgemäße Vorrichtung erforderliche, mindestens eine Anordnung von mehreren einzeln angesteuerten Werkzeugaktoreinheiten besteht aus mehreren Werkzeugaktoreinheiten, die mit der Sensorikeinheit durch einen Rahmen verbunden sind und mit ihr durch das Trägerfahrzeug über die zu bearbeitende Fläche gefahren werden. Die Aktoren der Werkzeugaktoreinheiten führen zumindest teilweise vertikale Hubbewegungen durch, um jeweils ein oder mehrere Werkzeuge von einer Ruheposition in eine Arbeitsposition zu verfahren. Die Aktoren können in Synchronisation mit dem Fahrtweg des Trägerfahrzeugs einzeln durch die Sensorikeinheit angesteuert werden.

Als Aktoren im Sinne der erfindungsgemäßen Vorrichtung eignen sich vorzugsweise pneumatische oder hydraulische Zylinder oder mechanisch oder elektromechanisch angetriebene Stempel oder Linearführungen.

Als Werkzeuge im Sinne der erfindungsgemäßen Vorrichtung eignen sich eine Vielzahl verschiedener Mittel, welche schädigend auf das Beikraut einwirken können und für ihre Wirksamkeit aus einer Ruheposition, welche typischerweise oberhalb des Wuchsbereiches der Pflanzen liegt, in eine Arbeitsposition, welche typischerweise im Wuchs- oder Wurzelbereich der Pflanzen liegt, verschoben werden müssen. Beispielsweise, aber nicht ausschließlich, können diese Werkzeuge ausgebildet sein als Mikrogrubberzinken, kleine Gänsefussschare, Reißhaken, Stempel mit verschiedenartig (beispielsweise flach, rund, spitz, profiliert) ausgeformten Enden, Schnapper oder Greifer, rotierende Fräsköpfe oder ähnliches.

Die Spurführungssignale können zum einen der direkten Ansteuerung der Lenkung des Trägerfahrzeugs dienen. Weiterhin können die Spurführungssignale mit weiteren Signalen fusioniert werden oder in Reglern integriert werden, bevor Lenkbefehle automatisiert aus diesen abgeleitet werden können. Weiterhin können die Spurführungssignale dem Fahrer eines bemannten Trägerfahrzeugs in einer Visualisierung dargestellt werden, um diesen beim manuellen Lenken zu unterstützen.

Flächig arbeitenden Bearbeitungseinheiten im Sinne der erfindungsgemäßen Vorrichtung können beispielsweise für die Beikrautregulierung als Gänsefussschare, Federzinken, Striegel, Roll- oder Fingerhacken, Fräsen oder andere Elemente ausgebildet sein. Für den Einsatz zur Schädlingsregulierung, beispielsweise Schnecken, ist auch der Einsatz schmaler Walzen zwischen den Reihen möglich. Es können auch mehrere flächig arbeitende Bearbeitungselemente innerhalb eines Zwischenreihenbereiches zu einer Einheit kombiniert werden.

Weitere Vorteile der erfindungsgemäßen Vorrichtung beziehungsweise des erfindungsgemäßen Verfahrens ergeben sich in weiteren, speziellen Ausgestaltungen und Abwandlungen.

Gemäß der Erfindung ist die mehrreihige Maschine so ausgebildet, dass die Sensorikeinheit beziehungsweise die Sensorikeinheiten einer oder mehrerer Bearbeitungseinheiten konfiguriert ist beziehungsweise sind, dass die Spurführungssignale basierend auf den Positionen der ganz oder teilweise erkannten Nutzpflanzen innerhalb der Scanbreite der Sensorikeinheit einer oder mehrerer Bearbeitungseinheiten ermittelt werden. Diese Konfiguration ist insbesondere für die Beikrautregulierung im Nachauflauf von Interesse.

Ebenfalls erfindungsgemäß kann die mehrreihige Maschine so ausgebildet sein, dass die Sensorikeinheit beziehungsweise die Sensorikeinheiten einer oder mehrerer Bearbeitungseinheiten so konfiguriert ist beziehungsweise sind, dass die Spurführungssignale basierend auf der Erkennung von Rillen, Profilen oder Mustern im Boden, welche durch die Sensorikeinheit einer oder mehrerer Bearbeitungseinheiten erkannt werden, ermittelt werden. Diese Konfiguration ist insbesondere für die Beikrautregulierung im Nachauflauf von Interesse.

Nach einer Ausgestaltung der erfindungsgemäßen Vorrichtung ist die mehrreihige Maschine so ausgebildet, dass die Spurführungssignale, welche durch die Bearbeitungseinheiten mehrerer Sensorikeinheiten ermittelt wurden, vor deren weiterer Nutzung fusioniert werden. Diese Konstellation erlaubt eine höhere Stabilität der Spurführung, insbesondere bei lückigen oder im Aufgang befindlichen Nutzpflanzenbeständen.

Nach einer Ausgestaltung der erfindungsgemäßen Vorrichtung ist die mehrreihige Maschine so ausgebildet, dass die Ansteuerung der Werkzeugaktoreinheiten basierend auf durch die jeweilige Sensorikeinheit erkannten ganz oder teilweise Beikräutern erfolgt. Diese Konfiguration ist für den Einsatz zur Beikrautregulierung von Interesse.

Nach einer Ausgestaltung der erfindungsgemäßen Vorrichtung ist die mehrreihige Maschine so ausgebildet, dass die Ansteuerung der Werkzeugaktoreinheiten basierend auf durch die jeweilige Sensorikeinheit erkannten Erkennung von Rillen, Profilen oder Mustern im Boden erfolgt. Diese Konfiguration ist für den Einsatz zur insbesondere im Vorauflauf der Nutzpflanzen von Interesse.

Nach einer Ausgestaltung der erfindungsgemäßen Vorrichtung ist die mehrreihige Maschine so ausgebildet, dass die Ansteuerung der Werkzeugaktoreinheiten basierend auf durch die jeweilige Sensorikeinheit erkannten Erkennung von Schädlingen erfolgt. Diese Konfiguration ist für den Einsatz insbesondere zur Regulierung von Schädlingen von Interesse. Diese Schädlinge können beispielsweise am Boden oder auf Boden-nahen Pflanzen befindliche Schnecken sein, welche durch Stempel vernichtet werden. Weiterhin können auch größere Insekten auf Blättern, beispielsweise Kartoffelkäfer, durch die Sensorikeinheit des Systems erkannt werden und, beispielsweise in Kombination mit Greifer-artigen Werkzeugen gezielt zerquetscht werden.

Der mehrreihige Aufbau dient der Erhöhung der Flächenleistung der erfindungsgemäßen Maschine. Vorzugsweise werden die selektiv arbeitenden Bearbeitungseinheiten dabei in Abständen montiert, die den Abständen der Pflanzreihen untereinander entsprechen und die flächig arbeitenden Bearbeitungseinheiten jeweils dazwischen.

Es wird ausdrücklich darauf hingewiesen, dass die vorstehend beschriebenen Ausgestaltungen der Erfindung jeweils für sich, aber auch in einer beliebigen Kombination untereinander mit dem Gegenstand des Hauptanspruchs kombinierbar sind, soweit dem keine zwingenden technischen Hindernisse entgegenstehen.

Weitere Abwandlungen und Ausgestaltungen des erfindungsgemäßen Verfahrens lassen sich der nachfolgenden elementweisen Beschreibung und den Zeichnungen entnehmen.

Die erfindungsgemäße Vorrichtung soll nun anhand einiger Ausführungsbeispiele näher beschrieben werden. Es zeigen:
**Abbildung 1****:** eine mögliche Werkzeugaktoreinheit in der Seitenansicht,
**Abbildung 2****:** eine mögliche selektiv arbeitende Bearbeitungseinheit in der Draufsicht,
**Abbildung 3****:** eine mögliche selektiv arbeitende Bearbeitungseinheit in der Seitenansicht,
**Abbildung 4****:** ein möglicher Aufbau der mehrreihigen Maschine im Feldeinsatz in der Draufsicht,
**Abbildung 5****:** einen möglichen Bodenquerschnitt nach Saat- oder Pflanzgutausbringung für den Einsatz der erfindungsgemäßen Maschine im Verfahren gemäß Anspruch 13
**Abbildung 6****:** eine mögliche Bodenoberfläche nach Saat- oder Pflanzgutausbringung für den Einsatz der erfindungsgemäßen Maschine im Verfahren gemäß Anspruch 14.

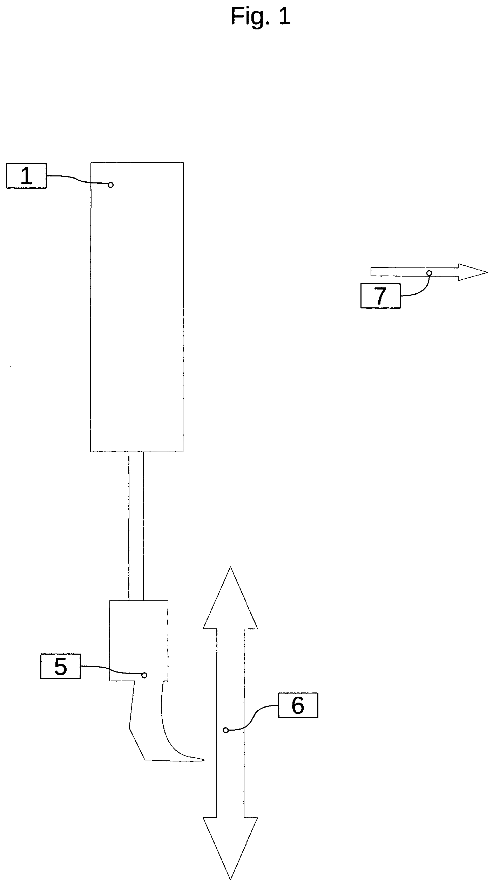

**Abbildung 1**zeigt eine mögliche Werkzeugaktoreinheit in der Seitenansicht. Ansteuerbar verschiebt der Aktor **1** das Werkzeug **5a,** hier als Mikrogrubberzinken ausgeführt, von der Ruheposition in die Arbeitsposition, wobei er es entlang der Translationsrichtung des Hubes 6 verschiebt. Die Werkzeugaktoreinheit wird entlang der Fahrrichtung 7 innerhalb Ihrer Anordnung durch das Trägerfahrzeug über das Feld gefahren.

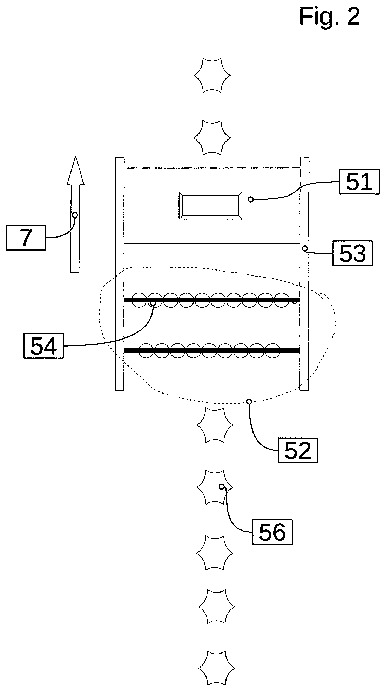

**Abbildung 2** zeigt eine mögliche selektiv arbeitende Bearbeitungseinheit in der Draufsicht. Die Sensorikeinheit **51** ist durch einen Verbindungsrahmen **53** mit der Anordnung von Werkzeugaktoreinheiten **52** verbunden. Bezugszeichen **54** markiert eine einzelne Werkzeugaktoreinheit. Entlang der Fahrtrichtung 7 wird die Bearbeitungseinheit über die Pflanzreihe der Nutzpflanzen **56** bewegt.

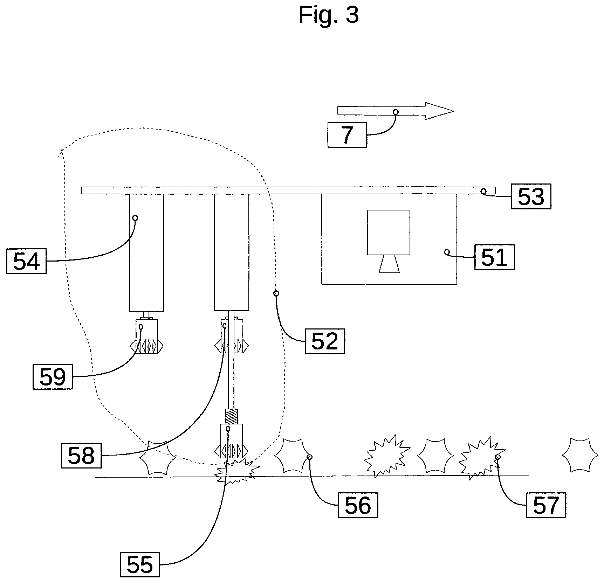

**Abbildung 3** zeigt eine mögliche selektiv arbeitende Bearbeitungseinheit in der Seitenansicht. Die Sensorikeinheit **51** ist durch einen Verbindungsrahmen **53** mit der Anordnung von Werkzeugaktoreinheiten **52** verbunden. Bezugszeichen **54** markiert eine einzelne Werkzeugaktoreinheit. Entlang der Fahrtrichtung 7 wird die Bearbeitungseinheit über die Pflanzreihe der Nutzpflanzen 56 bewegt. Die Werkzeuge 5b sind hier als rotierende Fräsköpfe ausgestaltet. Das Werkzeug gekennzeichnet durch Bezugszeichen 55 befindet sich in Arbeitsposition. In Fahrtrichtung 7 seitlich daneben befindet sich ein Werkzeug in Ruheposition 58. In Fahrtrichtung 7 dahinter daneben befindet sich ein Werkzeug in Arbeitsposition 59. Alle Werkzeuge können somit einzeln ansteuerbar von der Ruheposition in die Arbeitsposition verschoben werden. Vorzugsweise geschieht dies, wenn sich an der Stelle unterhalb des Werkzeuges mindestens ein zu bearbeitendes Objekt 57, wie beispielsweise ein Beikraut oder ein Schädling ganz oder teilweise befinden.

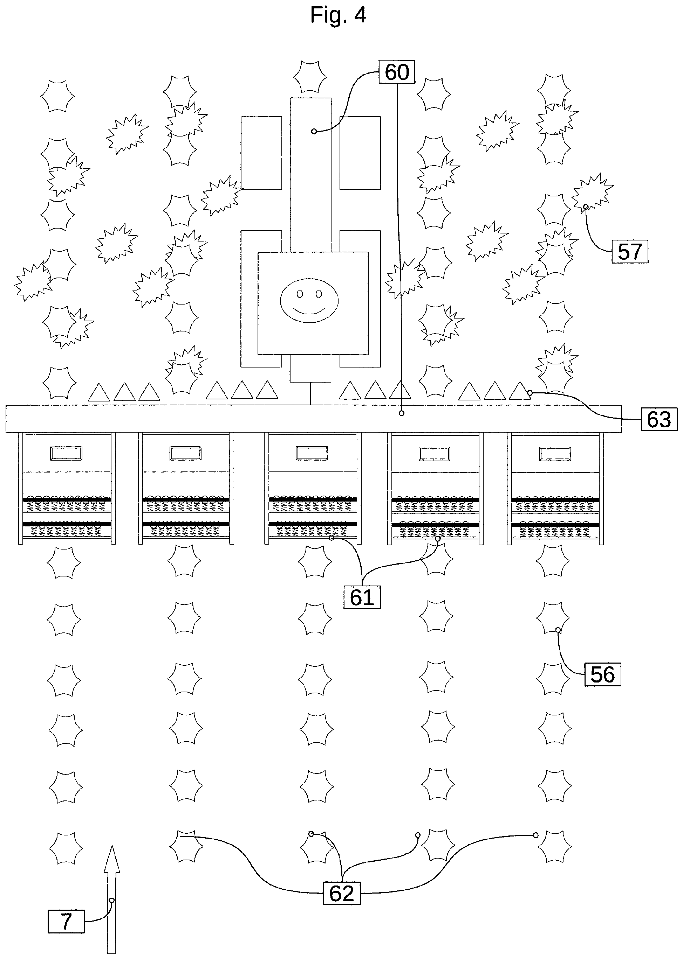

**Abbildung 4** zeigt einen möglichen Aufbau der mehrreihigen Maschine im Feldeinsatz in der Draufsicht. Durch das Trägerfahrzeug 60, hier ausgeführt als Kombination aus bemanntem Traktor und Anbaugerät, werden die verbundenen flächig arbeitenden Bearbeitungseinheiten **63** und die verbundenen selektiv arbeitenden Bearbeitungseinheiten 61 über das Feld mit einem Bestand an Nutzpflanzen 56 und zu bearbeitenden Objekten 57, wie beispielsweise Beikräutern oder Schädlingen, entlang der Fahrtrichtung 7 gefahren. Die selektiv arbeitenden Bearbeitungseinheiten laufen hierbei über den Pflanzreihen der Nutzpflanzen **62,** die flächig arbeitenden Bearbeitungseinheiten dazwischen.

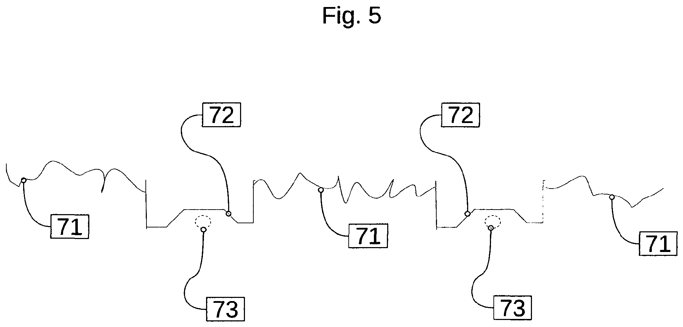

**Abbildung 5** zeigt einen möglichen Bodenoberflächenquerschnitt nach Saat- oder Pflanzgutausbringung für den Einsatz der erfindungsgemäßen Maschine im Verfahren gemäß Anspruch 13. Im Bereich der Ablagereihen des Saat- oder Pflanzgutes ist die Bodenoberfläche durch definierte Muster oder Rillen gekennzeichnet **72.** Im Bereich zwischen den Ablagereihen des Saat- oder Pflanzgutes ist die Bodenoberfläche hier undefiniert **71,** alternativ könnte sie hier definiert anders sein, als im Bereich der Ablagereihen des Saat- oder Pflanzgutes. Die einzelnen Saat- oder Pflanzgutelemente **73,** beispielsweise Saatkörner oder Pflanzknollen, liegen unterhalb der Oberfläche und sind somit vor dem Durchschießen der Keimlinge an der Oberfläche nicht zu sehen.

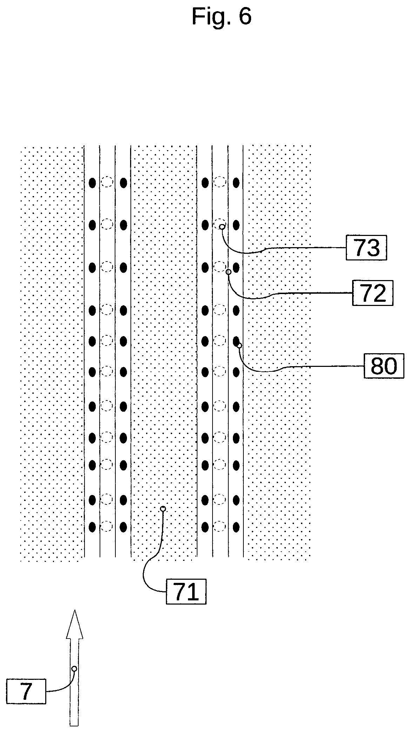

**Abbildung 6** zeigt eine mögliche Bodenoberfläche nach Saat- oder Pflanzgutausbringung für den Einsatz der erfindungsgemäßen Maschine im Verfahren gemäß Anspruch 14. Im Bereich der Ablagereihen des Saat- oder Pflanzgutes ist die Bodenoberfläche durch definierte Muster oder Rillen gekennzeichnet **72.** Im Bereich zwischen den Ablagereihen des Saat- oder Pflanzgutes ist die Bodenoberfläche hier undefiniert **71,** alternativ könnte sie hier definiert anders sein, als im Bereich der Ablagereihen des Saat- oder Pflanzgutes. Die einzelnen Saat- oder Pflanzgutelemente **73,** beispielsweise Saatkörner oder Pflanzknollen, liegen unterhalb der Oberfläche und sind somit vor dem Durchschießen der Keimlinge an der Oberfläche nicht zu sehen. Zusätzlich sind zur Markierung von deren Position entlang der Fahrtrichtung **7** neben oder über ihrer Position weitere Vertiefung, Erhöhungen oder Muster **80** in die Bodenoberfläche eingebracht.

Die vorstehenden Ausführungsbeispiele dienen nur der Erläuterung der Erfindung. Die Erfindung ist nicht auf die vorstehend beschriebenen Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

1 Aktor
5 Werkzeug
5a Werkzeug, hier Mikrogrubberzinken
5b Werkzeug, hier rotierender Fräskopf
6 Hubrichtung Aktor
7 Bewegungsrichtung Trägerfahrzeug
51 Sensorikeinheit
52 Anordnung von Werkzeugaktoreinheiten
53 Verbinderrahmen zwischen Sensorikeinheit und Anordnung von Werkzeugaktoreinheiten
54 Werkzeugaktoreinheit
55 Werkzeug in Arbeitsposition
56 Nutzpflanze
57 Zu bearbeitendes Objekt, beispielsweise Beikraut oder Schädling
58 Werkzeug in Ruheposition in Fahrtrichtung des Trägerfahrzeugs neben Werkzeug in
Arbeitsposition **55**
59 Werkzeug in Ruheposition in Fahrtrichtung des Trägerfahrzeugs hinter Werkzeug in
Arbeitsposition **55**
60 Trägerfahrzeug, hier Kombination aus Traktor und Anbaugerät
61 Selektiv arbeitende Bearbeitungseinheiten
62 Pflanzreihen der Nutzpflanzen
63 Flächig arbeitende Bearbeitungseinheiten
71 Bodenoberfläche Zwischenreihenbereich
72 Bodenoberfläche im Pflanzreihenbereich
73 Saat- oder Pflanzgutelement (beispielsweise Saatkorn)
80 Bodenprofilveränderung zur Markierung des Saat- oder Pflanzgutelement in Fahrtrichtung

### Zitierte Nicht-Patentliteratur

[NP1] "Robovator, Mechanisches Selektivhacksystem" https://www.kress-landtech-nik.eu/de/produkte/robovator.php, abgerufen am 09.03.2020.
[NP2] "Robocrop InRow Weeder", https://garford.com/de/robocrop-inrow-weeder/, abgerufen am 09.03.2020.
[NP3] D. C. Slaughter, D. K. Giles, and D. Downey. "Autonomous robotic weed control systems:A review." Computers and electronics in agriculture, 61(1):63-78, 2008.
[NP4] Frederik Langsenkamp, Fabian Sellmann, Maik Kohlbrecher, Arnd Kielhorn, Wolfram Strothmann, Andreas Michaels, Amo Ruckelshausen, and Dieter Trautz. Tube Stamp for mechanical intra-row individual Plant Weed Control, 2014, https://www.hsosnabrueck.de/fileadmin/HSOS/Homepages/COALA/Veroeffentlich ungen/2014-CIGR_2014_Tube_Stamp_for_mechanical_intra- row_individual_Plant_Weed_Control.pdf, abgerufen am 09.03.2020.
[NP5] Wolfram Strothmann, Arno Ruckelshausen, Joachim Hertzberg, Christian Scholz, Frederik Langsenkamp, Plant classification with In-Field-Labeling for crop/weed discrimination using spectral features and 3D surface features from a multi-wavelength laser line profile system, Computers and Electronics in Agriculture, Volume 134, March 2017, Pages 79-93, ISSN 0168-1699, http://dx.doi.Org/10.1016/j.compag.2017.01.003 .

### Zitierte Patentliteratur

DE102013222776 (A1) - Einrichtung, System und Verfahren zur Beschädigung eines Beikrauts
DE102016224733 (A1) - WEED DAMAGE DEVICE
DE102016217816 (A1) - Unkrautbeschädigungsvorrichtung mit Reinhaltungsfunktion
DE102018120756 (A1) - Mobile Analyse- und Bearbeitungsvorrichtung, Verfahren und Trägersystem
DE102011114901 (A1) - Vorrichtung zum mechanischen Entfernen von Pflanzen, insbesondere Unkräutern
US2018139947 (A1) - WEED CONTROL DEVICE

## Patentansprüche

1. Mehrreihige Maschine zur mechanischen Regulierung von Beikräutern und Schädlingen umfassend
a) ein Trägerfahrzeug **(60),**
b) mehrere selektiv arbeitende, mechanischen Bearbeitungseinheiten (**61**) bestehend aus mindestens einer Sensorikeinheit (**51**) zur Detektion von Beikräutern und/oder Schädlingen und mindestens einer Anordnung (**52**) von mehreren einzeln angesteuerten Werkzeugaktoreinheiten (**54**), welche mit dem Rahmen des Trägerfahrzeugs verbunden sind und durch dieses über die zu bearbeitende Fläche gefahren werden sowie deren Aktoren durch in Synchronisation mit Sensorikeinheit und Fahrtweg (**7**) des Trägerfahrzeugs (**60**) gesteuerte, zumindest teilweise vertikale Hübe jeweils mindestens ein Werkzeug (**5**) von einer Ruhe- in eine Arbeitsposition verschieben, wobei das Werkzeug mindestens dann in Arbeitsposition gebracht wird, wenn die Sensorikeinheit (**51**) an der Stelle des Feldes, wo sich das Werkzeug befindet, eines oder mehrere zu bearbeitende Objekte ganz oder teilweise erkannt hat
c) und mehrere flächig arbeitende Bearbeitungseinheiten **(63),**
wobei die flächig arbeitenden Bearbeitungseinheiten (**63**) zwischen den Pflanzreihen der Nutzpflanzen (**62**) arbeiten und die selektiv arbeitenden Bearbeitungseinheiten **(61)** im Bereich der Pflanzreihen der Nutzpflanzen **(62)** arbeiten, wobei die Sensorikeinheit **(51)** einer oder mehrerer der selektiv arbeitenden Bearbeitungseinheiten (**61**) so konfiguriert ist, dass sie basierend auf den erfassten Sensorrohdaten Signale für die Ansteuerung der jeweils gekoppelten Anordnung (**52**) von mehreren einzeln angesteuerten Werkzeugaktoreinheiten **(54)** ermittelt, **dadurch gekennzeichnet, dass** die Sensorikeinheit auch Spurführungssignale ermittelt, wobei die Spurführungssignale basierend auf den Positionen der ganz oder teilweise erkannten Nutzpflanzen (56) innerhalb der Scanbreite der Sensorikeinheit (51) einer oder mehrerer der Bearbeitungseinheiten (61) ermittelt werden, oder die Spurführungssignale basierend auf der Erkennung von Rillen, Profilen oder Mustern im Boden (72, 80), welche durch die Sensorikeinheit (51) einer oder mehrerer Bearbeitungseinheiten (61) erkannt werden, ermittelt werden.

2. Mehrreihige Maschine nach Anspruch 1, **dadurch gekennzeichnet, dass** jede der selektiv arbeitenden, mechanischen Bearbeitungseinheiten (**61**) über eine Vielzahl von einzeln angesteuerten Werkzeugaktoreinheiten (**54**) geringer Breite verfügt, sodass im Arbeitsbereich der selektiv arbeitenden, mechanischen Bearbeitungseinheiten (**61**) eine Regulierungsauflösung von circa 0,3 bis 2,5 cm Rastergröße erreicht wird.

3. Mehrreihige Maschine nach einem der vorangegangenen Ansprüche, **dadurch gekennzeichnet, dass** die Spurführungssignale, welche durch die Bearbeitungseinheiten **(61)** mehrerer Sensorikeinheiten **(51)** ermittelt wurden, vor deren weiterer Nutzung fusioniert werden.

4. Mehrreihige Maschine nach einem der vorangegangenen Ansprüche, **dadurch gekennzeichnet, dass** die Ansteuerung der Werkzeugaktoreinheiten **(54)** basierend auf durch die jeweilige Sensorikeinheit (51) erkannten ganz oder teilweise Beikräutern erfolgt.

5. Mehrreihige Maschine nach einem der Ansprüche 1 bis 4, **dadurch gekennzeichnet, dass** die Ansteuerung der Werkzeugaktoreinheiten **(54)** basierend auf durch die jeweilige Sensoreinheit (51) erkannten Erkennung von Rillen, Profilen oder Mustern in der Bodenoberfläche **(72, 80)** erfolgt.

6. Mehrreihige Maschine nach einem der Ansprüche 1 bis 4, **dadurch gekennzeichnet, dass** die Ansteuerung der Werkzeugaktoreinheiten **(54)** basierend auf durch die jeweilige Sensorikeinheit (51) erkannten Erkennung von Schädlingen erfolgt.

7. Mehrreihige Maschine nach einem der vorhergehenden Ansprüche, **dadurch gekennzeichnet, dass** es sich bei dem Trägerfahrzeug um einen autonomen Feldroboter handelt.

8. Mehrreihige Maschine nach einem der Ansprüche 1 bis 6, **dadurch gekennzeichnet, dass** es sich bei dem Trägerfahrzeug **(60)** um eine Kombination aus Traktor und Anbaugerät handelt.

9. Mehrreihige Maschine nach einem der Ansprüche 1 bis 6, **dadurch gekennzeichnet, dass** es sich bei dem Trägerfahrzeug um einen landwirtschaftlichen Selbstfahrer handelt.

10. Verfahren zur Beikrautregulierung, **gekennzeichnet durch** die Verwendung einer Maschine nach einem der vorhergehenden Ansprüche.

11. Verfahren zur Beikrautregulierung nach Anspruch 10, **dadurch gekennzeichnet, dass** in einem vorhergehenden Arbeitsschritt eine Saat- oder Pflanzgutablagevorrichtung oder -maschine während Ihrer Verwendung Rillen oder Muster in die Bodenoberfläche (72) einbringt, anhand derer sich die Ablagereihen oder Ablagepunkte des Saat- oder Pflanzgutes erkennen lassen.

12. Verfahren zur Schädlingsregulierung, **gekennzeichnet durch** die Verwendung einer Maschine nach einem der Ansprüche 1 bis 9 unter Einschluss von Anspruch 6.

13. Verfahren nach Anspruch 12, **dadurch gekennzeichnet, dass** es sich bei den Schädlingen um Schnecken handelt.

14. Computerprogramm, das dazu eingerichtet ist, eine Maschine nach einem der Ansprüche 1 bis 9 anzusteuern.

15. Maschinenlesbares Speichermedium, auf dem ein Computerprogramm nach Anspruch 14 gespeichert ist.

## Claims

1. A multi-row machine for the mechanical control of weeds and pests, comprising
a) a carrier vehicle (60),
b) several selectively operating mechanical processing units (61) consisting of at least one sensor unit (51) for detecting weeds and/or pests and at least one arrangement (52) of several individually controlled tool actuator units (54), which are connected to the frame of the carrier vehicle and are moved by it over the surface to be processed and whose actuators, by means of at least partially vertical strokes controlled in synchronization with the sensor unit and the travel path (7) of the carrier vehicle (60), move at least one tool (5) from a rest position into a working position, wherein the tool is moved into the working position at least when the sensor unit (51) has detected, either fully or partially, one or more objects to be processed at the location in the field where the tool is located
c) and several area-working processing units (63),
wherein the area-working processing units (63) operate between the planting rows of the crop plants (62) and the selectively operating processing units (61) operate in the area of the planting rows of the crop plants (62), wherein the sensor unit (51) of one or more of the selectively operating processing units (61) is configured such that based on the detected raw sensor data it determines signals for the control of the respectively coupled arrangement (52) of several individually controlled tool actuator units (54), **characterized in that** the sensor unit also determines guidance signals, wherein the guidance signals are determined based on the positions of the fully or partially detected crop plants (56) within the scan width of the sensor unit (51) of one or more of the processing units (61), or the guidance signals are determined based on the detection of grooves, profiles or patterns in the soil (72, 80) which are detected by the sensor unit (51) of one or more processing units (61).

2. The multi-row machine according to claim 1, **characterized in that** each of the selectively operating mechanical processing units (61) has a plurality of individually controlled tool actuator units (54) of small width, so that a regulating resolution of approximately 0.3 to 2.5 cm grid size is achieved in the working range of the selectively operating mechanical processing units (61).

3. The multi-row machine according to one of the preceding claims, **characterized in that** the guidance signals, which were determined by the processing units (61) of several sensor units (51), are fused before their further use.

4. The multi-row machine according to one of the preceding claims, **characterized in that** the control of the tool actuator units (54) is based on weeds detected wholly or partially by the respective sensor unit (51).

5. The multi-row machine according to one of claims 1 to 4, **characterized in that** the control of the tool actuator units (54) is based on the detection of grooves, profiles or patterns in the soil surface (72, 80) detected by the respective sensor unit (51).

6. The multi-row machine according to one of claims 1 to 4, **characterized in that** the control of the tool actuator units (54) is based on the detection of pests detected by the respective sensor unit (51).

7. The multi-row machine according to one of the preceding claims, **characterized in that** the carrier vehicle is an autonomous field robot.

8. The multi-row machine according to one of claims 1 to 6, **characterized in that** the carrier vehicle (60) is a combination of a tractor and an implement.

9. The multi-row machine according to one of claims 1 to 6, **characterized in that** the carrier vehicle is an agricultural self-propelled vehicle.

10. A method for weed control, **characterized by** the use of a machine according to one of the preceding claims.

11. The method for weed control according to claim 10, **characterized in that** in a preceding work step a seed material depositing device or planting material depositing device or seed material depositing machine or planting material depositing machine creates grooves or patterns in the soil surface (72) during its use, by means of which the depositing rows or depositing points of the seed material or planting material can be identified.

12. The method of pest control, **characterized by** the use of a machine according to any one of claims 1 to 9, including claim 6.

13. The method according to claim 12, **characterized in that** the pests are snails.

14. A computer program configured to control a machine according to any one of claims 1 to 9.

15. A machine-readable storage medium on which a computer program according to claim 14 is stored.

## Revendications

1. Machine à rangs multiples pour la régulation mécanique de mauvaises herbes et de nuisibles, comprenant
a) un véhicule porteur (60),
b) plusieurs unités de traitement mécaniques à fonctionnement sélectif (61) constituées d'au moins une unité de détection (51) pour la détection de mauvaises herbes et/ou de nuisibles et d'au moins un ensemble (52) de plusieurs d'unités d'actionneurs d'outil (54) pilotées individuellement, qui sont reliées au châssis du véhicule porteur et sont déplacées par celui-ci sur la surface à traiter et dont les actionneurs font coulisser au moins un outil (5) d'une position de repos dans une position de travail par des courses au moins en partie verticales commandées en synchronisation avec l'unité de détection et le trajet (7) du véhicule porteur (60), l'outil étant amené alors au moins dans la position de travail lorsque l'unité de détection (51) a identifié totalement ou en partie un ou plusieurs objets à traiter à l'emplacement du champ où se trouve l'outil,
c) et plusieurs unités de traitement fonctionnant en surface (63),
les unités de traitement fonctionnent en surface (63) fonctionnant entre les rangées de plantes des plantes utiles (62) et les unités de traitement à fonctionnement sélectif (61) fonctionnant dans la zone des rangées de plantes des plantes utiles (62), l'unité de détection (51) d'une ou de plusieurs des unités de traitement à fonctionnement sélectif (61) étant configurée de telle sorte qu'elle détermine des signaux pour le pilotage de l'ensemble (52) respectivement accouplé de plusieurs unités d'actionneurs d'outil (54) pilotées individuellement sur la base des données de capteur brutes détectées, **caractérisée en ce que** l'unité de détection détermine également des signaux de guidage de voie, les signaux de guidage de voie étant déterminés sur la base des positions des plantes utiles (56) totalement ou en partie identifiées dans la largeur de balayage de l'unité de détection (51) d'une ou de plusieurs des unités de traitement (61) ou les signaux de guidage de voie étant déterminés sur la base de l'identification de rainures, de profils ou de motifs dans le sol (72, 80), lesquels sont identifiés par l'unité de détection (51) d'une ou de plusieurs unités de traitement (61).

2. Machine à rangs multiples selon la revendication 1, **caractérisée en ce que** chacune des unités de traitement mécaniques à fonctionnement sélectif (61) dispose d'une pluralité d'unités d'actionneurs d'outil (54) à pilotage individuel de faible largeur, si bien qu'une résolution de régulation avec une taille de trame d'environ 0,3 à 2,5 cm est obtenue dans la zone de travail des unités de traitement mécaniques à fonctionnement sélectif (61).

3. Machine à rangs multiples selon l'une des revendications précédentes, **caractérisée en ce que** les signaux de guidage de voie, qui ont été déterminés par les unités de traitement (61) de plusieurs unités de détection (51), sont fusionnés avant leur utilisation ultérieure.

4. Machine à rangs multiples selon l'une des revendications précédentes, **caractérisée en ce que** les unités d'actionneurs d'outil (54) sont pilotées sur la base de mauvaises herbes identifiées totalement ou en partie par l'unité de détection (51) respective.

5. Machine à rangs multiples selon l'une des revendications 1 à 4, **caractérisée en ce que** les unités d'actionneurs d'outil (54) sont pilotées sur la base de l'identification de rainures, de profils ou de motifs dans la surface du sol (72, 80) identifiée par l'unité de détection (51) respective.

6. Machine à rangs multiples selon l'une des revendications 1 à 4, **caractérisée en ce que** les unités d'actionneurs d'outil (54) sont pilotées sur la base de l'identification de nuisibles identifiée par l'unité de détection (51) respective.

7. Machine à rangs multiples selon l'une des revendications précédentes, **caractérisée en ce que** le véhicule porteur est un robot de champ autonome.

8. Machine à rangs multiples selon l'une des revendications 1 à 6, **caractérisée en ce que** le véhicule porteur (60) est une combinaison d'un tracteur et d'un accessoire.

9. Machine à rangs multiples selon l'une des revendications 1 à 6, **caractérisée en ce que** le véhicule porteur est un véhicule agricole automoteur.

10. Procédé de régulation de mauvaises herbes, **caractérisé par** l'utilisation d'une machine selon l'une des revendications précédentes.

11. Procédé de régulation de mauvaises herbes selon la revendication 10, **caractérisé en ce que**, dans une étape de travail précédente, un dispositif ou une machine de dépôt de semences ou de plantes pratique, lors de son utilisation, des rainures ou des motifs dans la surface du sol (72), à l'aide desquels les rangées ou les points de dépôt des semences ou des plantes peuvent être identifiés.

12. Procédé de régulation de nuisibles, **caractérisé par** l'utilisation d'une machine selon l'une des revendications 1 à 9, y compris la revendication 6.

13. Procédé selon la revendication 12, **caractérisé en ce que** les nuisibles sont des escargots.

14. Programme informatique, qui est mis au point pour piloter une machine selon l'une des revendications 1 à 9.

15. Support de stockage lisible par machine, sur lequel est stocké un programme informatique selon la revendication 14.
